# EUROPEAN PATENT APPLICATION

(11) **EP 1 577 883 A1**
(43) Date of publication of application: **21.09.2005**
(21) Application number: 02792028.9
(22) Date of filing: 26.12.2002
(51) Int. Cl.: G11B 5/738, G11B 5/667, G11B 5/65

(54) **PERPENDICULAR MAGNETIC RECORDING MEDIUM**

(71) Applicant: FUJITSU LIMITED, Kanagawa 211-8588 (JP)
(72) Inventor: SHIMIZU, Sanae; C/O FUJITSU LIMITED, Kawasaki-shi, Kanagawa 211-8588 (JP); JOGO, Arata; C/O FUJITSU LIMITED, Kawasaki-shi, Kanagawa 211-8588 (JP); UZUMAKI, Takuya; C/O FUJITSU LIMITED, Kawasaki-shi, Kanagawa 211-8588 (JP); TANAKA, Atsushi; C/O FUJITSU LIMITED, Kawasaki-shi, Kanagawa 211-8588 (JP)
(74) Representative: Fenlon, Christine Lesley
(86) International application number: PCT/JP2002/013711
(87) International publication number: WO 2004/061829

(57) **Abstract**

A perpendicular magnetic recording medium including a substrate, a metal base layer formed on the substrate, a soft magnetic layer formed on the metal base layer by electroless plating and having an axis of easy magnetization in the in-plane direction of the substrate, and a magnetic recording layer formed on the soft magnetic layer and having an axis of easy magnetization in a direction perpendicular to the surface of the substrate. The metal base layer is formed of an alloy containing at least one element selected from the group consisting of Co, Ni, and Fe, and has a coercivity of 3 oersteds (Oe) or less. The soft magnetic layer has a thickness of 100 to 600 nm.

## Description

### Technical Field

The present invention relates to a perpendicular magnetic recording medium having a perpendicularly magnetized film as a recording film.

### Background Art

With a reduction in size and an increase in capacity of a magnetic disk drive, it has recently been desired to reduce the grain size of magnetic particles in a recording medium. In a conventional recording method referred to as an in-plane (longitudinal) recording method, it is difficult to greatly reduce the grain size of magnetic particles because of thermal instability. Accordingly, a perpendicular magnetic recording method superior to the in-plane recording method in thermomagnetic relaxation or the like has been investigated. A general perpendicular magnetic recording method employs a dual-layer medium fabricated by forming a soft magnetic backing layer (base layer) on a substrate and forming a perpendicularly magnetized film on the soft magnetic backing layer with a nonmagnetic layer interposed therebetween.

The perpendicular magnetic recording method is considered to be effective in realizing a high recording density because of its property such that adjacent bits are not opposite in magnetization to each other, but enhance mutually. Inserting a soft magnetic backing layer between a substrate and a recording layer is very effective for a perpendicular magnetic recording medium. However, a thickness of 200 to 400 nm is required for the thickness of the soft magnetic backing layer to exhibit the effect of this layer. If the soft magnetic backing layer is formed by sputtering for use in deposition of each layer in a conventional magnetic recording medium, a very long period of time is required for the formation of the soft magnetic backing layer having the above required thickness. As a result, a production cost is increased and mass production becomes difficult.

### Disclosure of Invention

It is therefore an object of the present invention to provide a perpendicular magnetic recording medium which can be mass-produced at a relatively low cost.

In accordance with an aspect of the present invention, there is provided a perpendicular magnetic recording medium including a substrate; a metal base layer formed on the substrate; a soft magnetic layer formed on the metal base layer by electroless plating, the soft magnetic layer having an axis of easy magnetization in the in-plane direction of the substrate; and a magnetic recording layer formed on the soft magnetic layer, the magnetic recording layer having an axis of easy magnetization in a direction perpendicular to the surface of the substrate.

Preferably, the metal base layer is formed of an alloy containing at least one element selected from the group consisting of Co, Ni, and Fe. More preferably, the metal base layer is formed of an alloy selected from the group consisting of Ni₈₀Fe₂₀, Ni₅₀Fe₅₀, FeC, FeAlSi, CoZrNb, and CoTaZr. Preferably, the metal base layer includes a soft magnetic thin film formed by sputtering and having a coercivity of 3 oersteds (Oe) or less. Preferably, the metal base layer has a thickness of 10 to 100 nm, more preferably 30 to 70 nm.

Preferably, the soft magnetic layer has a thickness of 100 to 600 nm, more preferably 200 to 400 nm. Preferably, the soft magnetic layer contains Co, Ni, Fe, and B, in which the content of Co is 40 to 80 at%, the content of Fe is 15 to 40 at%, the content of Ni is 5 to 20 at%, and the content of B is 0.5 to 5 at%.

One of the features of the present invention is that the soft magnetic layer in the perpendicular magnetic recording medium is formed by electroless plating. The electroless plating has advantages such that the film deposition rate is high, that a thick film can be easily obtained, and that a batch process can be performed. Accordingly, this method is greatly excellent in productivity. In the case of forming an electroless plated film on a substrate such as a glass substrate, a base layer showing catalytic activity to an electroless reaction is required. Since the electroless plating can attain a high deposition rate, it is possible to easily obtain a film thickness of 1µm or more at which the coercivity of the soft magnetic layer formed by the electroless plating becomes stable.

However, a lower coercivity is necessary in the range of 200 to 400 nm for the thickness of the soft magnetic layer which range is suitable in the case of using the soft magnetic layer as a backing layer in the perpendicular magnetic recording medium. In the case of forming a relatively thin soft magnetic film by electroless plating, it is effective to use a soft magnetic film of NiFe alloy or Co-base alloy as the base layer in place of a nonmagnetic NiP base layer. By using such a metal film having an excellent soft magnetic characteristic as the base layer, the dependence of a coercivity upon the thickness of an electroless plated film can be reduced. Accordingly, it is possible to obtain a soft magnetic backing layer having a low coercivity at a desired thickness and a stable soft magnetic characteristic.

### BRIEF DESCRIPTION OF THE DRAWINGS

FIG. 1 is a schematic sectional diagram showing the configuration of a perpendicular magnetic recording medium according to a preferred embodiment of the present invention;
FIG. 2 is a graph showing the dependence of a coercivity upon the thickness of a soft magnetic backing layer in the case that various metal materials are used for a base layer;
FIG. 3A is a graph showing BH loops in Example 1;
FIG. 3B is a graph showing BH loops in Example 2; and
FIG. 4 is a graph showing BH loops in Comparison 2.

### Best Mode for Carrying Out the Invention

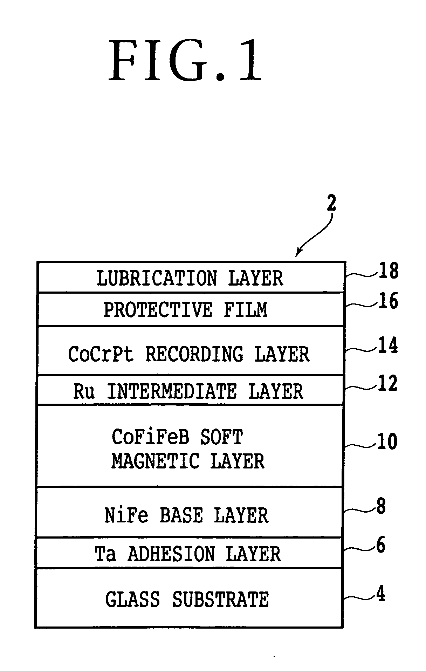

Referring to FIG. 1, there is shown a schematic sectional diagram showing the configuration of a perpendicular magnetic recording medium 2 according to a preferred embodiment of the present invention. A Ta adhesion layer 6 having a thickness of 1 nm is formed on a 2.5-inch glass disk substrate 4 by sputtering, and an NiFe base layer 8 having a thickness of 50 nm is formed on the Ta adhesion layer 6 by sputtering. The material of the base layer 8 is not limited to NiFe. Preferably, the base layer 8 is formed of an alloy containing at least one element selected from the group consisting of Co, Ni, and Fe. More preferably, the base layer 8 is formed of an alloy selected from the group consisting of Ni₈₀Fe₂₀, Ni₅₀Fe₅₀, FeC, FeAlSi, CoZrNb, and CoTaZr. The thickness of the base layer 8 is preferably set in the range of 10 to 100 nm, more preferably 30 to 70 nm.

A CoNiFeB soft magnetic backing layer 10 having a thickness of 300 nm is formed on the NiFe base layer 8 by electroless plating. The soft magnetic backing layer 10 has an axis of easy magnetization in the in-plane direction of the substrate 4. The electroless plating is a film deposition method capable of forming a film without using an external power source unlike electroplating, so that a uniform film thickness and a uniform composition can be obtained even in a minute complicated pattern.

The soft magnetic backing layer 10 contains Co, Ni, Fe, and B. The content of Co is 40 to 80 at%, preferably 50 to 70 at%. The content of Fe is 15 to 40 at%, preferably 20 to 30 at%. The content of Ni is 5 to 20 at%, preferably 10 to 15 at%. The content of B is 0.5 to 5 at%, preferably 0.5 to 2 at%. Further, the soft magnetic backing layer 10 has a coercivity of 8 oersteds (Oe) or less, preferably 3 Oe or less.

Co ions, Fe ions, Ni ions, a complexing agent, and a boron containing reducing agent are contained in a plating bath used for the electroless plating. A supply source for such metal ions is preferably selected from water-soluble salts such as sulfates, sulfamates, acetates, and nitrates. More preferably, sulfates are used. When the glass substrate 4 is immersed in the above plating bath, the CoNiFeB soft magnetic backing layer 10 is formed on the NiFe base layer 8 showing catalytic activity to an electroless reaction. In this electroless plating, the plating temperature is preferably set in the range of 40 to 95°C, more preferably 60 to 80°C.

A Ru intermediate layer 12 having a thickness of 10 nm is formed on the CoNiFeB soft magnetic backing layer 10 by sputtering. A CoCrPt recording layer 14 having a thickness of 20 nm is formed on the Ru intermediate layer 12 by sputtering. The recording layer 14 has an axis of easy magnetization in a direction perpendicular to the surface of the substrate 4. A protective film 16 having a thickness of 4 nm is formed on the CoCrPt recording layer 14 by sputtering. The protective film 16 is formed of diamond-like carbon. A lubrication layer 18 having a thickness of 1 nm is formed on the protective film 16 by sputtering. The lubrication layer 18 is formed of perfluoropolyether.

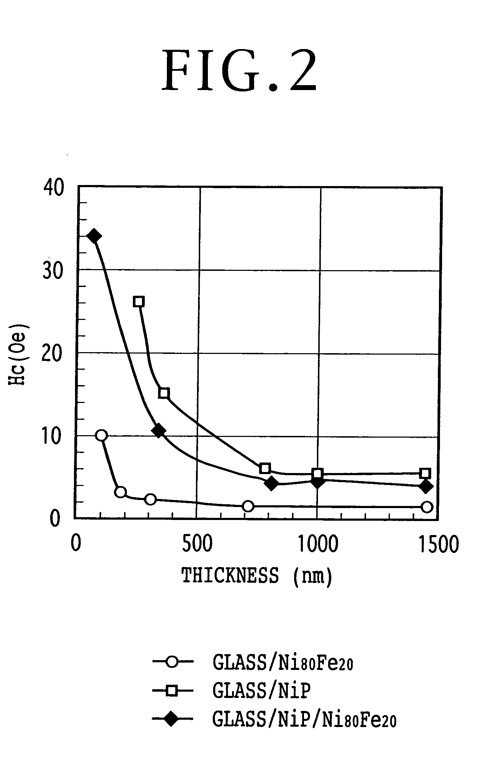

In the following test, a multilayer film composed of a Ta adhesion layer (1 nm), a Ni₈₀Fe₂₀ or NiP base layer (50 nm), and a CoNiFeB soft magnetic backing layer was formed on a 2.5-inch glass disk substrate, and the magnetic characteristic of the multilayer film was evaluated. The magnetostatic characteristic (coercivity) was measured by using a vibrating sample magnetometer (VSM). FIG. 2 shows the dependence of a coercivity (Hc) upon the thickness of the soft magnetic backing layer in the case of using various metal materials for the base layer.

As apparent from FIG. 2, the coercivity Hc decreases with an increase in the thickness of the soft magnetic backing layer, and becomes stable to a constant value when the thickness becomes 1000 nm or more in the case of each metal material. However, the constant value becomes different according to the kind of the base layer in spite of the same material for the soft magnetic backing layer. More specifically, the constant value for the coercivity becomes smaller in the order of NiP, NiP/NiFe, and NiFe for the base layer.

In the case that NiP is solely used for the base layer, the coercivity becomes 30 Oe or more when the thickness of the backing layer is 200 nm. In the case that NiP and NiFe are used in combination for the base layer, the coercivity becomes about 20 Oe when the thickness of the backing layer is 200 nm. In each of these cases, the coercivity is too large for the soft magnetic material to be used as the backing layer for the recording layer. To the contrary, in the case that NiFe is solely used for the base layer, the coercivity is reduced to 5 Oe when the thickness of the backing layer is 200 nm. Accordingly, the dependence of the coercivity upon the thickness of the soft magnetic backing layer can be reduced.

In a preferable range of 100 to 600 nm or a more preferable range of 200 to 400 nm as the thickness of the soft magnetic backing layer, the soft magnetic backing layer showing a low coercivity could be obtained by electroless plating deposition. Even in the case that NiP is solely used for the base layer, the coercivity becomes stable to a constant value when the thickness of the soft magnetic backing layer is 700 nm or more. Accordingly, a desired characteristic can be obtained by increasing the thickness of the soft magnetic backing layer.

Table 1 shows various film configurations and coercivity (hard direction) in Examples and Comparisons.

**Table 1**

| | Example 1 | Example 2 | Comparison 1 | Comparison 2 |
|---|---|---|---|---|
| Substrate | glass disk (2.5-inch) | ← | ← | ← |
| Adhesion film | Ta (1 nm) | ← | ← | ← |
| Base layer 1 | Ni₈₀Fe₂₀ (50 nm) | NiP (50 nm) | NiP (50 nm) | NiP (50 nm) |
| Base layer 2 | - | - | - | Ni₈₀Fe₂₀ (50 nm) |
| Soft magnetic layer | CoNiFeB (310 nm) | CoNiFeB (1000 nm) | CoNiFeB (380 nm) | CoNiFeB (340 nm) |
| coercivity (Oe) | 3.2 | 5.9 | 14.5 | 10.9 |

As apparent from Table 1, in Example 1 using Ni₈ₒFe₂₀ (50 nm thick) for the base layer, a very small coercivity of 3.2 Oe is obtained when the thickness of the soft magnetic backing layer is 310 nm. Further, also in Example 2 using NiP (50 nm thick) for the base layer and increasing the thickness of the soft magnetic backing layer to 1000 nm, a relatively small coercivity of 5.9 is obtained. In Comparisons 1 and 2, the coercivity cannot be sufficiently reduced, so that these cases are not preferable.

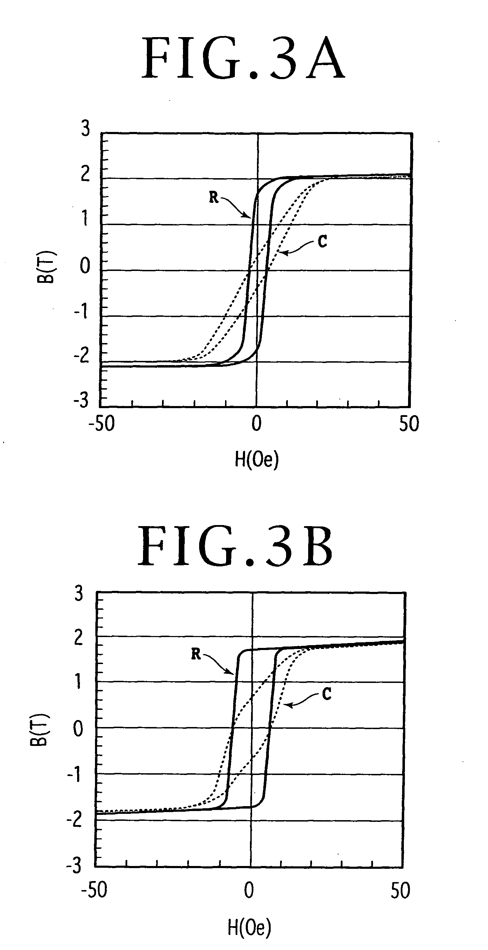

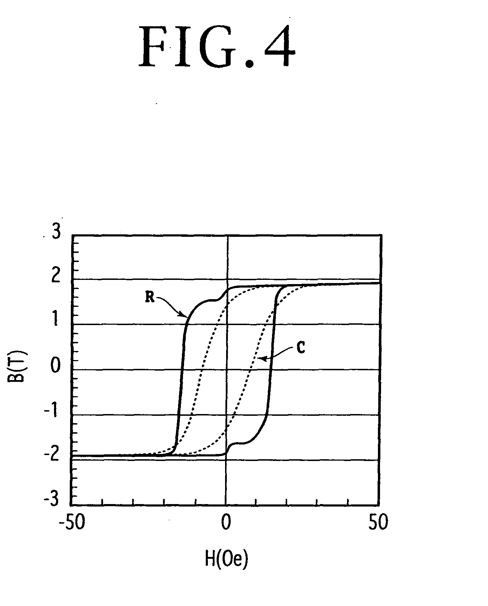

FIG. 3A shows BH loops in Example 1, and FIG. 3B shows BH loops in Example 2. FIG. 4 shows BH loops in Comparison 2. In FIGS. 3A, 3B, and 4, R denotes a BH loop in the radial direction of the disk, and C denotes a BH loop in the circumferential direction of the disk.

### Industrial Applicability

According to the present invention, it is possible to form a backing layer in a perpendicular magnetic recording medium having a desired soft magnetic characteristic by electroless plating. Accordingly, a recording magnetic field in the perpendicular direction can be preferentially enhanced and steepened to thereby allow higher-density recording.

## Claims

1. A perpendicular magnetic recording medium comprising:
a substrate;
a metal base layer formed on said substrate;
a soft magnetic layer formed on said metal base layer by electroless plating, said soft magnetic layer having an axis of easy magnetization in the in-plane direction of said substrate; and
a magnetic recording layer formed on said soft magnetic layer, said magnetic recording layer having an axis of easy magnetization in a direction perpendicular to the surface of said substrate.

2. The perpendicular magnetic recording medium according to claim 1, wherein said metal base layer is formed of an alloy containing at least one element selected from the group consisting of Co, Ni, and Fe.

3. The perpendicular magnetic recording medium according to claim 1, wherein said metal base layer comprises a soft magnetic thin film having a coercivity of 3 oersteds or less.

4. The perpendicular magnetic recording medium according to claim 1, wherein said metal base layer is formed of an alloy selected from the group consisting of Ni₈₀Fe₂₀, Ni₅₀Fe₅₀, FeC, FeAlSi, CoZrNb, and CoTaZr.

5. The perpendicular magnetic recording medium according to claim 1, wherein said soft magnetic layer has a thickness of 100 to 600 nm.

6. The perpendicular magnetic recording medium according to claim 1, wherein said metal base layer has a thickness of 10 to 100 nm.

7. The perpendicular magnetic recording medium according to claim 1, wherein said soft magnetic layer is formed of CoNiFeB.

8. The perpendicular magnetic recording medium according to claim 7, wherein the content of Co is 40 to 80 at%, the content of Fe is 15 to 40 at%, the content of Ni is 5 to 20 at%, and the content of B is 0.5 to 5 at%.
